(19) Europäisches Patentamt

European Patent Office

Office européen des brevets

(11) **EP 0 963 244 B1**

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(21) Anmeldenummer: **98905318.6**

(22) Anmeldetag: **20.01.1998**

(51) Int Cl.⁷: **B01F 17/00**, C23F 11/12, C23G 5/06, C10M 173/00

(86) Internationale Anmeldenummer:
**PCT/EP98/00278**

(87) Internationale Veröffentlichungsnummer:
**WO 98/032527 (30.07.1998 Gazette 1998/30)**

(54) **SCHAUMARMES EMULGATORSYSTEM UND DIESES ENTHALTENDES EMULSIONSKONZENTRAT**

LOW-FOAM EMULGATOR SYSTEM AND EMULSION CONCENTRATE CONTAINING THE SAME

SYSTEME EMULSIFIANT A FAIBLE POUVOIR MOUSSANT ET CONCENTRE EMULSIFIABLE LE CONTENANT

(84) Benannte Vertragsstaaten:
**AT BE CH DE DK ES FR GB IT LI SE**

(30) Priorität: **29.01.1997 DE 19703083**

(43) Veröffentlichungstag der Anmeldung:
**15.12.1999 Patentblatt 1999/50**

(73) Patentinhaber: **Henkel Kommanditgesellschaft auf Aktien 40191 Düsseldorf (DE)**

(72) Erfinder:
• **GEKE, Jürgen**
  **D-40225 Düsseldorf (DE)**
• **SPECKMANN, Horst-Dieter**
  **D-40764 Langenfeld (DE)**
• **STEDRY, Bernd**
  **D-47906 Kempen (DE)**

(56) Entgegenhaltungen:
EP-A- 0 254 208          EP-A- 0 681 865
CH-A- 510 455            DE-A- 3 933 137
DE-A- 4 212 592          DE-A- 4 323 908
DE-A- 4 323 909

• PATENT ABSTRACTS OF JAPAN vol. 017, no. 154 (C-1040), 26.März 1993 & JP 04 318100 A (KAO CORP), 9.November 1992,

EP 0 963 244 B1

## Beschreibung

Die Erfindung betrifft die Verwendung eines Emulgatorsystems zur Herstellung von schwachschäumenden Öl-in-Wasser-Emulsionen in weichem Wasser. Das Emulgatorsystem kann mit geeigneten Carbonsäuren zu einem Korrosionsschutzsystem ergänzt werden. Weiterhin betrifft die Erfindung ein ölhaltiges, wassermischbares Emulsionskonzentrat, das das erfindungsgemäß zu verwendende Emulgatorsystem enthält, sowie hieraus hergestellte anwendungsfertige Öl-in-Wasser-Emulsionen. Diese Emulsionen zeigen auch in weichem Wasser nur geringe Schaumneigung und können für unterschiedliche technische Metallbearbeitungsprozesse eingesetzt werden, beispielsweise als Reinigungs-, Korrosionsschutz- oder Kühlschmierstoffemulsionen.

Korrosionsschutzemulsionen werden als Passivierungsmittel zum temporären Schutz metallischer Werkstücke vor atmosphärischen, eine Korrosion bewirkenden Einflüssen eingesetzt. Sie enthalten im wesentlichen unpolare oder polare Öle, Emulgatoren, Korrosionsinhibitoren und Wasser. Handelsübliche Systeme basieren auf Ölkonzentraten, die Emulgatoren und Korrosionsinhibitoren, jedoch wenig oder kein Wasser, enthalten. Die verwendeten Emulgatoren und Korrosionsinhibitoren müssen daher öllöslich sein. Für die Herstellung von Öl-in-Wasser-Emulsionen ("O/W-Emulsionen"), die in mit Wasser verdünnter Form zur Anwendung gelangen, müssen derartige Systeme selbstemulgierend sein.

Kühlschmierstoffemulsionen, die bei der spanlosen oder spanabhebenden Umformung von metallischen Werkstücken eingesetzt werden, weisen eine ähnliche Zusammensetzung wie Korrosionsschutzemulsionen auf, da sie ebenfalls eine korrosionsinhibierende Wirkung zeigen müssen. Durch Zusatz geeigneter Schmieradditive läßt sich die Schmierwirkung verbessern.

Allen diesen Emulsionstypen ist gemeinsam, daß sie wegen der eingesetzten Emulgatoren zur Schaumbildung neigen. Die Schaumneigung ist besonders ausgeprägt, wenn das Emulgatorsystem anionische Tenside enthält. Beim Einsatz in hartem Wasser wird die Schaumneigung dadurch verringert, daß die anionischen Tenside mit Calciumionen schwerlösliche Salze bilden können, die schaumhemmend wirken. In weichem bis mittelhartem Wasser, also in Wasser mit weniger als 12 ° und insbesondere mit weniger als 8 °dH, sind derartige Emulsionen wegen der hohen' Schaumneigung zumindest dann nicht einsetzbar, wenn im Spritzverfahren gearbeitet wird.

Aus der DE-A-39 33 137 und der DE-A-43 23 908 sind Emulsionskonzentrate und Emulgatorsysteme bekannt, die nur nichtionische Emulgatoren enthalten. Das Emulgatorsystem gemäß der DE-A-39 33 137 besteht aus mindestens einem Anlagerungsprodukt von 2 bis 20 Mol Ethylenoxid an Fettalkohole mit 10 bis 22 C-Atomen, dem bis zu gleiche Gewichtsteile einer Coemulgator-Komponenten, bestehend aus mindestens einem Fettalkohol mit 12 bis 22 C-Atomen, zugesetzt sein können. Das Emulgatorsystem gemäß DE-A-43 23 908 besteht aus mindestens einem Anlagerungsprodukt von 5 bis 12 Mol Ethylenoxid an Fettalkohole mit 16 bis 18 C-Atomen und mindestens einem Anlagerungsprodukt von 1 bis 2 Mol Ethylenoxid an Fettalkohole mit 12 bis 18 C-Atomen oder mindestens einem Monoglycerinester von Fettsäuren mit 16 bis 18 C-Atomen. Die Emulsionskonzentrate gemäß diesen beiden Dokumenten werden nach der sogenannten "Phaseninversionsmethode" hergestellt. Nachteilig ist hierbei der relativ hohe Wasseranteil der Emulsionskonzentrate, der aufwendige Herstellprozeß sowie der geringe mögliche Inhibitoranteil der Konzentrate. Weiterhin muß die Emulsionsstabilität des Konzentrats selbst optimiert werden, was die mögliche Formulierungsbreite einschränkt.

Die EP-A-0 681 856 beschreibt ein schaumarmes Netzmittel, bestehend aus den folgenden Komponenten: 1) 30 bis 90 Gew.-% eines oder mehrerer Stoffe der Formel $R^1O$-$(EO)_m$-H und/oder $R^1O$-$(EO)_n$-$(PO)_o$-H und/oder $R^1O$-$(PO)_p$-$(EO)_q$-H, 2) 70 bis 10 Gew.-% eines oder mehrerer Stoffe der Formel $R^2O$-$(PO)_r$-H und 3) 0 bis 30 Gew.-% eines oder mehrerer Stoffe der Formel $R^3O$-$(EO)_s$-H, wobei sich alle Prozentangaben auf das Gesamtgewicht des Netzmittels beziehen und wobei $R^1$ und $R^2$ unabhängig voneinander geradkettiges oder verzweigtes $C_4$-$C_{20}$-Alkyl, $C_4$-$C_{20}$-Alkenyl, $C_5$-$C_8$-Cycloalkyl, $C_6$-$C_{12}$-Aryl, das durch $C_1$-$C_{12}$-Alkyl 1- bis 3-fach substituiert sein kann, oder $C_7$-$C_{10}$-Aralkyl, dessen aromatischer Teil 1- bis 3-fach durch $C_1$-$C_4$-Alkyl substituiert sein kann, bedeuten; $R^3$ geradkettiges oder verzweigtes $C_{12}$-$C_{22}$ Alkyl, $C_{12}$-$C_{22}$-Alkenyl oder Phenyl, das durch 1 bis 3 Alkylgruppen mit insgesamt 6 bis 12 C-Atomen substituiert ist, bedeutet; m und r unabhängig voneinander Zahlen von 1 bis 30, bevorzugt 1 bis 20 darstellen; n, o, p und q unabhängig voneinander Zahlen von 1 bis 10 darstellen und s eine Zahl von 15 bis 50 darstellt. Derartige Netzmittel finden Verwendung zum Einsatz inwäßrigen Flotten bei textilen Prozessen der Färberei, der Vor- und Nachbehandlung im Zusammenhang mit der Färberei, Prozessen des Bleichens, im Zusammenhang mit Ausrüstungsprozessen, bei der Hydrophobierung, bei der Oleophobierung und bei der Antistatik-Ausrüstung.

Die CH-A-510 455 (entsprechend DE-A-15 93 210) betrifft einen Emulgator für die Herstellung von als kosmetische Zubereitungen und pharmazeutische Produkte geeigneten Emulsionen. Der Emulgator besteht aus einer Verbindung der Formel R-$(OC_3H_6)_n$-$(OC_2H_4)_p$-OH, in der R ein gesättigtes Radikal mit 12 bis 20 C-Atome, n eine Zahl zwischen 3 bis 8 und p eine Zahl, deren Wert so hoch sein soll, damit der Alkohol in Wasser unlöslich ist, wenn der Emulgator für W/O-Emulsion geeignet sein soll, und im allgemeinen 1 bis 6 beträgt, oder deren Wert so groß sein soll, daß der Alkohol in Wasser löslich ist, wenn der Emulgator für O/W-Emulsionen geeignet sein soll.

Die Erfindung stellt sich die Aufgabe, ein Emulgatorsystem zur Verfügung zu stellen, mit dem durch einfaches Zusammenrühren wasserarme oder wasserfreie Emulsionskonzentrate für O/W-Emulsionen hergestellt werden können. Die aus diesen Konzentraten durch Versetzen mit Wasser erhältlichen anwendungsfertigen O/W-Emulsionen sollen auch in weichem Wasser eine nur geringe Schaumneigung aufweisen.

Diese Aufgabe wird gelöst durch die Verwendung eines schaumarmes Emulgatorsystems, bestehend aus

a) Ethoxylaten/Propoxylaten von Fettalkoholen mit 8 bis 18 C-Atomen im Alkohol mit 2 bis 6 Ethylenoxideinheiten und 4 bis 8 Propylenoxideinheiten und
b) Fettalkoholen und/oder Fettalkoholpropoxylaten mit 12 bis 24 C-Atomen im Alkohol und 0 bis 3 Propylenoxideinheiten und/oder Destillationsrückstand dieser Fettalkohole im Gewichtsverhältnis a : b = 1 : 0,3 bis 0,3 : 1,

zur Herstellung von ölhaltigen, wassermischbaren Emulsionskonzentraten und/oder von Öl-in-Wasser-Emulsionen.

An die Zusammensetzung des Emulgatorsystems und die molekulare Struktur der verwendeten Emulgatoren sind also enge Anforderungen zu stellen. Zum einen müssen gemäß a) Fettalkoholethoxylate/Propoxylate vorhanden sein, die sowohl 2 bis 6 Ethylenoxideinheiten als auch 4 bis 8 Propylenoxideinheiten tragen. Diese hydrophileren Komponenten sind zu kombinieren mit den hydrophoberen Komponenten b) unalkoxylierte Fettalkohole mit 12 bis 24 C-Atomen, deren Destillationsrückstand oder deren Alkoxylierungsprodukte mit bis zu im Mittel höchstens 3 Propylenoxideinheiten. Weiterhin ist das angegebene ungefähre Gewichtsverhältnis zu beachten. Destillationsrückstand von Fettalkoholen mit 12 bis 24 C-Atomen ist von der Henkel KGaA, Düsseldorf, unter der Bezeichnung Pernil[R] RU erhältlich.

Das erfindungsgemäß zu verwendende Emulgatorsystem kann, wie nachstehend beschrieben, mit weiteren Komponenten zu Reinigungs-, Korrosionsschutz- und/oder Kühlschmierstoffemulsionen ergänzt werden. Das Emulgatorsystem kann jedoch auch als solches in den Handel kommen. Der Abnehmer kann dann mit seiner Hilfe den gewünschten Emulsionstyp zusammenstellen. In einem ersten Schritt kann das Emulgatorsystem mit einer Korrosionsschutzkomponente ergänzt werden, woraus durch Ölzusatz ein Konzentrat für eine Korrosionsschutzemulsion hergestellt werden kann. Daher betrifft die Erfindungs in einem zweiten Aspekt ein Korrosionsschutz- und Emulgatorsystem, bestehend aus 15 bis 40 Gewichtsteilen einer oder mehrerer geradkettigen oder verzweigten Carbonsäuren mit 6 bis 10 C-Atomen, oder deren Anionen, und 15 bis 40 Gewichtsteilen Emulgatorkomponente, die sich zusammensetzt aus

a) Ethoxylaten/Propoxylaten von Fettalkoholen mit 8 bis 18 C-Atomen im Alkohol mit 2 bis 6 Ethylenoxideinheiten und 4 bis 8 Propylenoxideinheiten und
b) Fettalkoholen und/oder Fettalkoholpropoxylaten mit 12 bis 24 C-Atomen im Alkohol und 0 bis 3 Propylenoxideinheiten und/oder Destillationsrückstand dieser Fettalkohole

im Gewichtsverhältnis a : b = 1 : 0,3 bis 0,3 : 1.

Da Korrosionsschutzemulsionen üblicherweise neutrale bis basische pH-Werte aufweisen, ist es vorzuziehen, die Carbonsäuren zumindest teilweise in neutralisierter Form, also als Salze, einzusetzen. Als basische Komponente zur Neutralisation eignen sich insbesondere Kalilauge und/oder Alkanolamine, wobei letztere die Korrosionsinhibitorwirkung verstärken. Wegen der Gefahr einer Nitrosaminbildung ist dabei der Einsatz von Dialkanolaminen weniger bevorzugt. Stattdessen verwendet man Monoalkanolamine oder Trialkanolamine oder bevorzugt Mischungen hiervon. Insbesondere werden Ethanolamine eingesetzt.

Die korrosionsinhibierend wirkenden Carbonsäuren können geradkettig oder verzweigt sein. Gemische unterschiedlicher Säuren können besonders vorteilhaft sein. Bevorzugte Beispiele derartiger Carbonsäuren sind Caprylsäure, Ethylhexansäure, Isononansäure und Isodecansäure.

In einem weiteren Aspekt betrifft die Erfindung ein ölhaltiges, wassermischbares Emulsionskonzentrat, enthaltend

15 bis 35 Gewichtsteile einer Ölkomponenten,
30 bis 80 Gewichtsteile des Korrosionsschutz- und Emulgatorsystems nach einem oder beiden der Ansprüche 2 und 3.

Ein derartiges Konzentrat kann durch Zugabe der entsprechenden Gewichtsteile einer Ölkomponente zu dem vorstehend beschriebenen Korrosionsschutz- und Emulgatorsystem erhalten werden. Selbstverständlich ist es möglich, ein derartiges Konzentrat dadurch herzustellen, daß man die Ölkomponente, die einzelnen Emulgatoren des Emulgatorsystems und die Carbonsäuren in beliebiger Reihenfolge zusammenmischt. Dabei kann man die Carbonsäuren direkt als Salze einsetzen. Verfahrenstechnisch vorteilhafter ist es jedoch, die Säuren als solche den anderen Komponenten zuzumischen und erst nach Abmischung mit der Ölkomponente und dem Emulgatorsystem durch Zugabe von Alkalimetallauge, insbesondere von Kalilauge, und/oder Alkanolaminen zu neutralisieren.

Als Ölkomponente können unpolare oder polare Öle petrochemischen oder nativen Ursprungs eingesetzt werden. Weiterhin sind synthetische Ölkomponenten geeignet. Beispiele einsetzbarer Ölkomponenten sind paraffinisches oder naphtenisches Mineralöl, Dialkylether mit 12 bis 20 C-Atomen und/oder Esteröle.

Als fakultative weitere Hilfs- oder Wirkstoffe sind zu nennen: Schmieradditive allgemein und insbesondere sogenannte "Extreme-Pressure"-Additive (sogenannte EP-Additive), weitere Korrosionsinhibitoren wie beispielsweise Borsäure oder zusätzliche Alkanolamine, Lösevermittler wie beispielsweise Glykole, Glycerin oder Na-Cumolsulfonat. Weiterhin können Biozide zugesetzt werden, die die Standzeit der Emulsion verlängern.

Weiterhin betrifft die Erfindung die anwendungsfertige Öl-in-Wasser-Emulsion, die dadurch erhältlich ist, daß man etwa 0,5 bis etwa 10 Gewichtsteile des vorstehend beschriebenen Konzentrats mit etwa 99,5 bis etwa 90 Gewichtsteile Wasser versetzt. Aufgrund der selbstemulgierenden Eigenschaften des Emulsionskonzentrats bildet sich die anwendungsfertige Emulsion beim Versetzen mit Wasser spontan oder nach geringfügiger mechanischer Bewegung wie beispielsweise Rühren. Diese Emulsion kann beispielsweise als Reinigungs-, Korrosionsschutz- oder Kühlschmierstoffemulsion eingesetzt werden. Bei Verwendung von weichem Wasser zum Ansetzen der Emulsion weist diese gegenüber Emulsionen des Stands der Technik den großen Vorteil auf, nur wenig zur Schaumbildung zu neigen. Sie ist daher in Spritzverfahren im Temperaturbereich zwischen dem Gefrierpunkt und dem Siedepunkt der Emulsion einsetzbar und erfordert keine Mindesttemperatur für Spritzanwendungen. Auch bei der Verwendung als Kühlschmierstoffemulsion macht sich die Schaumarmut positiv bemerkbar. Auch wenn das neue Emulgatorsystem und die dieses enthaltenden Emulsionen besonders in weichem Wasser ihre technischen Vorteile zeigen, sind sie jedoch auch in hartem Wasser ohne Nachteile einsetzbar.

Ausführungsbeispiele

Nachstehend sind einige Beispiele erfindungsgemäßer Emulsionskonzentrate aufgeführt, die das erfindungsgemäß zu verwendende Emulgatorsystem enthalten. Sie wurden durch Zusammenrühren der Komponenten in der angegebenen Reihenfolge erhalten. Die Tabelle 1 zeigt die beispielhaft hergestellten Emulsionskonzentrate.

**Tabelle 1:** Zusammensetzung (Gew.-%) der Emulsionskonzentrate

| Rezeptur | 1 | 2 | 3 | 4 | 5 | 6 | 7 | 8 |
|---|---|---|---|---|---|---|---|---|
| Pionieröl 0014-40N | 35,8 | 30,0 | 31,0 | 28,0 | 27,5 | 27,5 | 27,5 | 30,0 |
| Isononansäure | 5,0 | 25,0 | 25,0 | 27,0 | | 15,0 | 15,0 | 10,0 |
| Caprylsäure | 15,0 | | | | | 15,0 | 15,0 | 15,0 |
| Isodecansäure | | | | | 32,0 | | | |
| Borsäure | | | | | | | | |
| 9-Octadecen-1-ol | | 12,5 | 12,5 | 12,5 | 5,5 | 5,5 | 5,5 | 12,0 |
| Fettalkohol $C_{12/14}$ + 3 EO + 6 PO | 8,0 | 12,5 | | | | 12,5 | 6,0 | |
| Fettalkohol $C_{12/14}$ + 2 EO + 4 PO | | | | | 13,0 | | 6,0 | 12,0 |

Fortsetzung Tabelle 1

| Rezeptur | 1 | 2 | 3 | 4 | 5 | 6 | 7 | 8 |
|---|---|---|---|---|---|---|---|---|
| Fettalkohol $C_{12/14}$ + 5 EO + 4 PO | | | 12,5 | | | | | |
| Fettalkohol $C_{12/18}$ + 4 EO + 5 PO | | | | 12,5 | | | | |
| Oleyl-Cetylalkohol + 2 PO | 6,0 | | | | | | | |
| 1,2-Dipropylenglykol | 1,0 | | | | | 1,0 | 1,2 | 1,2 |
| Glycerin | | | | | | | | |
| 45%ige KOH | 10,2 | 15,0 | 15,0 | 16,0 | 17,5 | 19,0 | 19,0 | 14,9 |
| Monoethanolamin | 5,0 | 5,0 | 4,0 | 4,0 | 4,5 | 4,5 | 4,8 | 4,9 |
| Pernil[R] RU[1) | 14,0 | | | | | | | |
| Rhodafac[R] PA35[2) | | | | | | | | |
| Na-Cumolsulfat | | | | | | | | |

Fortsetzung Tabelle 1

| Rezeptur | 9 | 10 | 11 | 12 | 13 | 14 |
|---|---|---|---|---|---|---|
| Pionieröl 0014-40N | 30,0 | 30,0 | 30,0 | 30,0 | 30,0 | 26,5 |
| Isononansäure | 10,0 | 10,0 | 17,5 | 16,0 | 17,5 | 17,5 |
| Caprylsäure | 15,0 | 15,0 | 10,0 | 10,0 | 7,5 | 10,0 |
| Isodecansäure | | | | | | |
| Borsäure | | | | | | 1,5 |
| 9-Octadecen-1-ol | | | | | | |
| Fettalkohol $C_{12/14}$ + 3 EO + 6 PO | | | | | 8,0 | 8,0 |
| Fettalkohol $C_{12/14}$ + 2 EO + 4 PO | 12,0 | 12,0 | 8,0 | 8,0 | | |

## Fortsetzung Tabelle 1

| Rezeptur | 9 | 10 | 11 | 12 | 13 | 14 |
|---|---|---|---|---|---|---|
| Fettalkohol $C_{12/14}$ + 5 EO + 4 PO | | | | | | |
| Fettalkohol $C_{12/18}$ + 4 EO + 5 PO | | | | | | |
| Oleyl-Cetylalkohol + 2 PO | 12,0 | 12,0 | 8,0 | 8,0 | 8,0 | 8,0 |
| 1,2-Dipropylenglykol | 1,2 | 0,5 | | | | |
| Glycerin | | | | | | 4,5 |
| 45%ige KOH | 14,9 | 15,1 | 12,5 | 11,4 | 10,5 | 24,0 |
| Monoethanolamin | 4,9 | 4,9 | 7,9 | 7,9 | 7,9 | |
| Pernil$^R$ RU[1] | | | | 4,7 | 10,6 | |
| Rhodafac$^R$ PA35[2] | | 0,5 | | | | |
| Na-Cumolsulfat | | | 6,1 | 4,0 | | |

[1] Pernil RU = Destillationsrückstand bei der Fettalkohol-Destillation

[2] Rhodafac PA 35 = Oleyl-Cetylalkohol + 5 EO -mono/di-phosphat, Fa. Rhône-Poulenc

Schaumverhalten

Mit Emulsionen aus den Konzentraten gemäß Rezepturen 1, 2, 3, 4, 8, 9 und 13 wurden 2 gew-%ige Emulsionen in Wasser mit einem Härtegrad entsprechend 3 °dH hergestellt. Jeweils 10 1 dieser Emulsion wurden mit Temperaturen im Bereich zwischen etwa 30 und etwa 45 °C in einer eindüsigen Spritzanlage mit einem Spritzdruck von 5 bar für eine Zeitdauer von 60 Minuten gespritzt. Während des Betriebs der Spritzanlage wurde die Schaumhöhe gemessen, die definiert ist als die Höhe des Schaumes über dem Flüssigkeitsniveau im Ausgangszustand. In allen Fällen lag die Schaumhöhe unter 2 cm.

Vergleichsversuche

| Rezeptur: | V1 | V2 | V3 |
|---|---|---|---|
| Pionieröl 0014-4ON | 30,00 | 30,00 | 37,00 |
| Isononansäure | 25,00 | 25,00 | - |
| Kalilauge, 45 %ig | 15,00 | 15,00 | 8,00 |
| Monoethanolamin | 5,00 | 5,00 | 5,00 |
| Oleylalkohol | - | 12,50 | 12,50 |
| $C_{12/14}$-Fettalkohol + 3 EO + 6 PO | 12,50 | - | 12,50 |

(fortgesetzt)

| Rezeptur: | V1 | V2 | V3 |
|---|---|---|---|
| Oleyl-Cetyl-Alkohol + 5 EO | 12,50 | 12,50 | - |
| Ölsäure | - | - | 25,00 |
| | 100,00 | 100,00 | 100,00 |

Mit allen 3 Rezepturen wurden Schaumversuche in der Spritzanlage wie beschrieben durchgeführt (20 g/l in Wasser mit 3 °dH).

Ergebnisse:

Die Anlage schaltet sich bei Erreichen einer Schaumhöhe von 7 cm selbsttätig ab. In der Tabelle sind die Zeiten bis zum Abschalten angegeben, d. h. keine der Formulierungen ist nach diesem Versuch als "spritzbar" oder "schaumarm" einzustufen.

| Rezeptur: | V1 | V2 | V3 |
|---|---|---|---|
| Raumtemperatur (23 °C) | 1,5 min | 2 min | 1,5 min |
| 40 °C | 2 min | 2,5 min | 2 min |

Korrosionsschutz

Aus den Konzentraten gemäß Rezepturen 1, 5, 9, 10, 11 und 13 wurden 2,5 gew.-%ige Emulsionen in Wasser mit einem Härtegrad entsprechend 3 °dH hergestellt. Hiermit wurde eine Korrosionsschutzprüfung nach dem Späne/Filtrierpapier-Verfahren gemäß der deutschen Norm DIN 51 360/2 durchgeführt, wie er für wassergemischte Kühlschmierstoffemulsionen üblich ist Hierfür werden Gußeisenspäne auf einem Rundfilter mit der Emulsion benetzt und 2 Stunden lang in einer Glasschale bei Raumtemperatur gehalten. Anschließend werden die Korrosionsabzeichen auf dem Filterpapier visuell beurteilt und in die Korrosionsgrade 0 bis 4 eingeteilt. Dabei bedeuten Korrosionsgrad 0: keine Korrosion, Korrosionsgrad 1: Spuren von Korrosion, Korrosionsgrad 2: leichte Korrosion, Korrosionsgrad 3: mäßige Korrosion und Korrosionsgrad 4: starke Korrosion. Der Korrosionsgrad betrug für Emulsionen nach den Rezepturen 1, 5, 10, 11 und 13 0 und lag für die Emulsion gemäß Rezeptur 9 zwischen 0 und 1.

Mit Emulsionen aus den Rezepturen 1, 7 und 13 wurde weiterhin das Korrosionsverhalten in einem Plattenklimatest bestimmt, wie er für Korrosionsschutzemulsionen typisch ist. Hierfür wurden aus den genannten Konzentraten 2 gew.-%ige Emulsionen in Wasser mit einer Härte entsprechend 20 °dH hergestellt. Probebleche aus Stahl St 1405 wurden mit Scheuerpulver und einer Bürste gereinigt, unter fließendem Stadtwasser und vollentsalztem Wasser gespült, in Ethanol getaucht und anschließend mit entölter Preßluft trockengeblasen. Anschließend wurden die Bleche mit den einzelnen Emulsionen bei einer Temperatur von 65 °C mit einem Spritzdruck von 3 bar für 3 Minuten gespritzt und für 2 bis 3 Stunden an der Laboratmosphäre getrocknet. Anschließend werden die Bleche in geschlossenen Klimakästen bei Raumtemperatur und verschiedenen Luftfeuchtigkeiten gelagert. Die visuelle Begutachtung der Korrosion erfolgt in der ersten Woche täglich, später 2 mal wöchentlich. Der Test wird nach 40 Tagen bzw. bei Erreichen von 30 % Flächenkorrosion abgebrochen. Aus den Befunden wird nach folgendem Schema ein Korrosionsschutzwert (KSW) bestimmt. Die Korrosionsschutzwirkung ist um so besser, je höher der erreichte Wert ist. Der Maximalwert von 112 zeigt maximalen Korrosionsschutz für 40 Tage.

Zur Bestimmung des Korrosionsschutzwertes KSW wird folgendes Berechnungsschema verwendet:

$$KSW = A + B + C \leq 112$$

| Grenzwert | | |
|---|---|---|
| A = | keine Korrosion (0 %), Anzahl Tage | $\leq 12$ |
| B = | geringe Korrosion ($\leq 1$ %), Anzahl Tage | $\leq 40$ |
| C = | $C_1$ + Bonus $C_2$ | $\leq 60$ |

(fortgesetzt)

| Grenzwert | | |
|---|---|---|
| $C_1$ = | (Anzahl Tage bis 30 % Korrosion) x 0,5 | ≤ 20 |
| $C_2$ = | Bonus gemäß Tabelle, wenn nach 40 Tagen < 30 % Korrosion festgestellt wurde | ≤ 40 |

Tabelle zur Bestimmung des Bonus $C_2$:

| Korrosion nach 40 Tagen | ≥ 30 % - 0 |
|---|---|
| | 20 % - 10 |
| | 10 % - 20 |
| | 5 % - 30 |
| | ≤ 1 % - 40 |

Ermittelte Korrosionsschutzwerte:

| Rezeptur | rel. Luftfeuchte | | | |
|---|---|---|---|---|
| | 65% | 76% | 86% | 100% |
| 1 | 112 | 112 | 68 | 6 |
| 7 | 112 | 112 | 2 | 10 |
| 13 | 112 | 112 | 4 | 11 |

Emulsionsstabilität

Aus den Konzentraten gemäß Rezepturen 1, 6, 9, 12, 13 und 14 wurden 2 gew.-%ige Emulsionen in Wasser mit einer Härte gemäß 20 °dH hergestellt. Nach 48 Stunden wurde die Stabilität der Emulsion gemäß der deutschen Norm DIN 51 367 bestimmt. Ergebnis:

| Rezeptur | 1 | 6 | 9 | 12 | 13 | 14 |
|---|---|---|---|---|---|---|
| Emulsionsstabilität | 92% | 85% | 95% | 95% | 93% | 87% |

**Patentansprüche**

1.   Verwendung eines schaumarmes Emulgatorsystems, bestehend aus

   a) Ethoxylaten/Propoylaten von Fettalkoholen mit 8 bis 18 C-Atomen im Alkohol mit 2 bis 6 Ethylenoxideinheiten und 4 bis 8 Propylenoxideinheiten und
   b) Fettalkoholen und/oder Fettalkoholpropoxylaten mit 12 bis 24 C-Atomen im Alkohol und 0 bis 3 Propylenoxideinheiten und/oder Destillationsrückstand dieser Fettalkohole

im Gewichtsverhältnis a : b = 1 : 0,3 bis 0,3 : 1,
zur Herstellung von ölhaltigen, wassermischbaren Emulsionskonzentraten und/oder von Öl-in-Wasser-Emulsionen.

2.   Korrosionsschutz- und Emulgatorsystem, bestehend aus
   15 bis 40 Gewichtsteilen einer oder mehrerer geradkettigen oder verzweigten Carbonsäuren mit 6 bis 10 C-Atomen, oder deren Anionen, und
   15 bis 40 Gewichtsteilen Emulgatorkomponente, die sich zusammensetzt aus

   a) Ethoxylaten/Propoxylaten von Fettalkoholen mit 8 bis 18 C-Atomen im Alkohol mit 2 bis 6 Ethylenoxideinheiten und 4 bis 8 Propylenoxideinheiten und
   b) Fettalkoholen und/oder Fettalkoholpropoxylaten mit 12 bis 24 C-Atomen im Alkohol und 0 bis 3 Propylenoxideinheiten und/oder Destillationsrückstand dieser Fettalkohole

im Gewichtsverhältnis a : b = 1 : 0,3 bis 0,3 : 1.

3. Korrosionschutz- und Emulgatorsystem nach Anspruch 2, **dadurch gekennzeichnet, daß** die Carbonsäuren teilweise oder vollständig als Kaliumund/oder Alkanolammoniumsalze vorliegen.

4. Ölhaltiges, wassermischbares Emulsionskonzentrat, enthaltend
15 bis 35 Gewichtsteile einer Ölkomponente,
30 bis 80 Gewichtsteile des Korrosionsschutz- und Emulgatorsystems nach
einem oder beiden der Ansprüche 2 und 3.

5. Emulsionskonzentrat nach Anspruch 4, **dadurch gekennzeichnet, daß** es als Ölkomponente paraffinisches oder naphthenisches Mineralöl, Dialkylether mit 12 bis 20 C-Atomen und/oder Esteröle enthält.

6. Emulsionskonzentrat nach einem oder beiden der Ansprüche 4 und 5, **dadurch gekennzeichnet, daß** es zusätzlich als Hilfs- oder Wirkstoffe Schmieradditive, EP-Additive, weitere Korrosionsinhibitoren und/oder Biocide enthält.

7. Öl-in-Wasser-Emulsion, erhältlich durch Vermischen von 0,5 bis 10 Gewichtsteilen eines Emulsionskonzentrats nach einem oder mehreren der Ansprüche 4 bis 6 mit 99,5 bis 90 Gewichtsteilen Wasser.

8. Verwendung der Emulsion nach Anspruch 7 als Reinigungs-, Korrosionsschutzoder Kühlschmierstoffemulsion.

**Revendications**

1. Utilisation d'un système d'agent émulsionnant à faible pouvoir moussant qui consiste en :

a) éthoxylates / propoxylates d'alcools gras ayant 8 à 18 atomes de carbone dans un alcool ayant de 2 à 6 éléments d'oxyde d'éthylène et de 4 à 8 éléments d'oxyde de propylène et
b) des alcools gras et/ou des propoxylates d'alcool gras ayant de 12 à 24 atomes de carbone dans un alcool et de 0 à 3 éléments d'oxyde de propylène et/ou du résidu de distillation de ces alcools gras

dans un rapport pondéral a : b = 0,3 à 0,3 : 1,
en vue de la production de concentrés d'émulsion miscibles à l'eau, contenant de l'huile, et/ou d'émulsions huile dans l'eau.

2. Système de protection contre la corrosion et d'agent émulsionnant consistant en :
15 à 40 parties en poids d'un ou plusieurs acides carboxyliques à chaîne droite ou ramifiés ayant de 6 à 10 atomes de carbone, ou leurs anions et de 15 à 40 parties en poids de composants émulsionnants qui se compose en :

a) des éthoxylates /propoxylates d'alcools gras ayant de 8 à 18 atomes de carbone dans un alcool avec de 2 à 6 éléments d'oxyde d'éthylène et de 4 à 8 éléments d'oxyde de propylène et
b) des alcools gras et/ou de propoxylates d'alcool gras ayant de 12 à 24 atomes de carbone dans un alcool et de 0 à 3 éléments d'oxyde de propylène et/ou du résidu de distillation de ces alcools gras

dans un rapport pondéral a : b = 1 : 0,3 à 0,3 : 1.

3. Système de protection contre la corrosion et d'agent émulsionnant selon la revendication 2,
**caractérisé en ce que**
les acides carboxyliques se présentent partiellement ou complètement, sous forme de sels de potassium et/ou d'alcanol ammonium.

4. Concentré d'émulsion miscible à l'eau, contenant

- de 15 à 35 parties en poids d'un composant huileux,
- de 30 à 80 parties en poids du système de protection contre la corrosion et d'agent émulsionnant selon l'une ou deux des revendications 2 et 3.

5. Concentré d'émulsion selon la revendication 4,

**caractérisés en ce qu'**
il renferme comme composant huileux une huile minérale paraffinique ou naphténique, un éther dialkylique ayant de 12 à 20 atomes de carbone et/ou des huiles estérifiées.

6. Concentré d'émulsion selon l'une ou les deux des revendications 4 à 5,
   **caractérisé en ce qu'**
   il renferme en supplément comme adjuvant ou principes actifs, des additifs lubrifiants, des additifs d'EP, d'autres inhibiteurs de corrosion et/ou des biocides.

7. Emulsion huile dans l'eau accessible par mélange de 0,5 à 10 parties en poids d'un concentré d'émulsion selon l'une ou plusieurs des revendications 4 à 6, avec 99,5 à 90 parties en poids d'eau.

8. Utilisation de l'émulsion selon la revendication 7, comme émulsion de nettoyage, de protection contre la corrosion, ou lubrifiant à froid.


**Claims**

1. Use of a low-foam emulsifier system consisting of:

   a) ethoxylates/propoxylates of fatty alcohols having 8 to 18 carbon atoms in the alcohol with 2 to 6 ethylene oxide units and 4 to 8 propylene oxide units; and
   b) fatty alcohols and/or fatty alcohol propoxylates having 12 to 24 carbon atoms in the alcohol and 0 to 3 propylene oxide units and/or the distillation residue of these fatty alcohols;

   in a ratio, by weight, of a:b of 1:0.3 to 0.3:1, for the production of water-miscible emulsion concentrates containing oil and/or of oil-in-water emulsions.

2. Corrosion protection and emulsifier system consisting of:

   15 to 40 parts by weight of one or more straight- or branched-chain carboxylic acids having 6 to 10 carbon atoms or the anions thereof; and
   15 to 40 parts by weight of emulsifier component composed of:

      a) ethoxylates/propoxylates of fatty alcohols having 8 to 18 carbon atoms in the alcohol with 2 to 6 ethylene oxide units and 4 to 8 propylene oxide units; and
      b) fatty alcohols and/or fatty alcohol propoxylates having 12 to 24 carbon atoms in the alcohol and 0 to 3 propylene oxide units and/or the distillation residue of these fatty alcohols;

   in a ratio, by weight, of a:b of 1:0.3 to 0.3:1.

3. Corrosion protection and emulsifier system according to claim 2, wherein the carboxylic acids are present in part or entirely as potassium and/or
   alkanolammonium salts.

4. Water-miscible emulsion concentrate containing oil and:

   15 to 35 parts, by weight, of an oil component;
   30 to 80 parts, by weight, of the corrosion protection and emulsifier system according to one or both of claims 2 and 3.

5. Emulsion concentrate according to claim 4, wherein it contains paraffinic or naphthenic mineral oil, dialkyl ethers having 12 to 20 carbon atoms and/or ester oils as the oil component.

6. Emulsion concentrate according to one or both of claims 4 and 5, wherein it additionally contains lubricating additives, EP additives, further corrosion inhibitors and/or biocides as auxiliary or active substances.

7. Oil-in-water emulsion obtainable by mixing 0.5 to 10 parts, by weight, of an emulsion concentrate according to one or more of claims 4 to 6 with 99.5 to 90 parts, by weight, of water.

8. Use of the emulsion according to claim 7 as a cleaning, corrosion protection or cooling lubricant emulsion.